# EUROPEAN PATENT APPLICATION

(11) **EP 4 796 358 A1**
(43) Date of publication of application: **26.08.2026**
(21) Application number: 24883884.9
(22) Date of filing: 22.05.2024
(51) Int. Cl.: B60K 6/36

(54) **POWER SYSTEM AND VEHICLE**

(30) Priority: 31.10.2023 CN 202311437587
(71) Applicant: BYD Company Limited, Shenzhen, Guangdong 518118 (CN)
(72) Inventor: CUI, Xianjue, Shenzhen, Guangdong 518118 (CN); ZHANG, Yisheng, Shenzhen, Guangdong 518118 (CN); GAO, Jun, Shenzhen, Guangdong 518118 (CN); JIANG, Wenzhi, Shenzhen, Guangdong 518118 (CN); XU, Shilin, Shenzhen, Guangdong 518118 (CN)
(74) Representative: Taor, Simon Edward William
(86) International application number: PCT/CN2024/094776
(87) International publication number: WO 2025/091871

(57) **Abstract**

A powertrain system and a vehicle are provided. A first motor, a drive assembly, and a differential are included. The drive assembly includes a first drive gear, a second drive gear, a third drive gear, and a fourth drive gear. The first drive gear is drivingly connected to the first motor, and the first drive gear is meshed with the second drive gear. The second drive gear is drivingly connected to the third drive gear. The fourth drive gear is fixedly disposed on the differential and is meshed with the third drive gear.

## Description

This application claims priority to Chinese Patent Application No. 202311437587.8, filed with the China National Intellectual Property Administration on October 31, 2023 and entitled "POWERTRAIN SYSTEM AND VEHICLE", which is incorporated herein by reference in its entirety.

### TECHNICAL FIELD

The present disclosure relates to the field of vehicle technologies, and in particular, to a powertrain system and a vehicle.

### BACKGROUND

In a conventional vehicle powertrain system, the powertrain system usually includes an engine, a generator, and an electric motor connected in series, in parallel, or in a hybrid manner. Power from the engine or the electric motor is transferred to a differential through a drive system, to drive a vehicle to move forward.

In a related technology, efficiency of kinetic energy transfer from the electric motor to the differential is low, resulting in a significant energy loss.

### SUMMARY

An objective of the present disclosure is to provide a powertrain system and a vehicle, to resolve a problem of poor drive efficiency in an existing powertrain system.

To achieve the objective of the present disclosure, according to a first aspect, the present disclosure provides a powertrain system, including a first motor, a drive assembly, and a differential. The drive assembly includes a first drive gear, a second drive gear, a third drive gear, and a fourth drive gear. The first drive gear is drivingly connected to the first motor, and the first drive gear is meshed with the second drive gear. The second drive gear is drivingly connected to the third drive gear. The fourth drive gear is fixedly disposed on the differential and is meshed with the third drive gear.

In a possible implementation, the drive assembly further includes a first drive shaft. The second drive gear and the third drive gear are fastened to the first drive shaft.

In a possible implementation, the powertrain system further includes an engine and a transmission assembly. The transmission assembly includes an input end, an output end, a first clutch end, and a second clutch end. The input end is drivingly connected to the engine, and the input end is drivingly connected to both the first clutch end and the second clutch end. The output end is drivingly connected to the drive assembly, and the output end is capable of being selectively drivingly connected to the first clutch end and the second clutch end.

In a possible implementation, the drive assembly further includes a fifth drive gear. The fifth drive gear is drivingly connected to the third drive gear. The input end includes a first speed change gear, and the first speed change gear is drivingly connected to the engine. The output end includes a second speed change gear, and the second speed change gear is meshed with the fifth drive gear. The first clutch end includes a third speed change gear and a fourth speed change gear. The second clutch end includes a fifth speed change gear and a sixth speed change gear. The first clutch end includes a third speed change gear, a fourth speed change gear, and a first clutch. The first speed change gear is drivingly connected to the third speed change gear. The third speed change gear is meshed with the fourth speed change gear. The first clutch is clutch-connected to the fourth speed change gear, and the first clutch is drivingly connected to the first speed change gear.

In a possible implementation, the second clutch end includes a fifth speed change gear, a sixth speed change gear, and a second clutch. The second clutch is drivingly connected to the first speed change gear. The fifth speed change gear is clutch-connected to the second clutch, and the fifth speed change gear is meshed with the sixth speed change gear. The sixth speed change gear is drivingly connected to the first speed change gear.

In a possible implementation, the transmission assembly further includes a second drive shaft and a third drive shaft. The first speed change gear, the third speed change gear, and the second clutch are fastened to the second drive shaft. The first clutch, the sixth speed change gear, and the second speed change gear are fastened to the third drive shaft.

In a possible implementation, the first drive shaft, the second drive shaft, and the third drive shaft are arranged in a same direction.

In a possible implementation, the first clutch and the second clutch are arranged in a first direction. The first direction and an axis direction of the engine intersect each other.

In a possible implementation, the first direction and the axis direction of the engine are perpendicular to each other.

In a possible implementation, the transmission assembly further includes a third clutch. The third clutch has a first clutch position and a second clutch position. The first clutch position of the third clutch is capable of being selectively clutch-connected to the first clutch end, and the second clutch position of the third clutch is capable of being selectively clutch-connected to the second clutch end.

In a possible implementation, the drive assembly further includes a fifth drive gear. The fifth drive gear is drivingly connected to the third drive gear. The input end includes a first speed change gear, and the first speed change gear is drivingly connected to the engine. The output end includes a second speed change gear, and the second speed change gear is meshed with the fifth drive gear. The first clutch end includes a third speed change gear and a fourth speed change gear. The second clutch end includes a fifth speed change gear and a sixth speed change gear. The first speed change gear is drivingly connected to the third clutch. The third speed change gear is clutch-connected to the first clutch position of the third clutch. The fourth speed change gear is meshed with the third speed change gear. The fifth speed change gear is clutch-connected to the second clutch position of the third clutch. The sixth speed change gear is meshed with the fifth speed change gear.

In a possible implementation, the third clutch, the second speed change gear, and the fifth drive gear are disposed in a second direction. The second direction and an axis direction of the engine intersect each other.

In a possible implementation, the second direction and the axis direction of the engine are perpendicular to each other.

In a possible implementation, the powertrain system further includes a second motor, a sixth drive gear, and a seventh drive gear. The sixth drive gear is drivingly connected to the engine. The seventh drive gear is drivingly connected to the second motor, and the seventh drive gear is meshed with the sixth drive gear.

In a possible implementation, the powertrain system further includes a fourth clutch. The fourth clutch is drivingly connected to the engine, and the fourth clutch is clutch-connected to the sixth drive gear. The sixth drive gear is drivingly connected to the clutch end.

According to a second aspect, the present disclosure further provides a vehicle. The vehicle includes the powertrain system according to any implementation of the first aspect.

In the technical solutions of the present disclosure, in a pure electric mode of the vehicle, power output by the first motor is transferred to the differential through two-stage reduction (the first drive gear and the second drive gear are one stage, and the third drive gear and the fourth drive gear are the other stage). Compared with multi-stage reduction between a motor and a differential in a related technology, the drive mode provided in the present disclosure features fewer reduction stages, a lower kinetic energy loss, and higher transfer efficiency.

### BRIEF DESCRIPTION OF DRAWINGS

To describe the technical solutions in implementations of the present disclosure or in the conventional technology more clearly, the following briefly describes the accompanying drawings needed for describing the implementations or the conventional technology. Clearly, the accompanying drawings in the following descriptions merely show some implementations of the present disclosure, and a person of ordinary skill in the art can still derive other drawings from these accompanying drawings without creative efforts.
FIG. 1 is a schematic diagram of a drive path of a powertrain system in a first operating mode according to the present disclosure;
FIG. 2 is a schematic diagram of a drive path of a powertrain system in a second operating mode according to the present disclosure;
FIG. 3 is a schematic diagram of a drive path of a powertrain system in a third operating mode according to the present disclosure;
FIG. 4 is a schematic diagram of a drive path in an embodiment of a second operating mode;
FIG. 5 is a schematic diagram of a transfer path in an embodiment of a third operating mode;
FIG. 6 is a schematic diagram of a transfer path in another embodiment of a second operating mode;
FIG. 7 is a schematic diagram of a transfer path in another embodiment of a third operating mode;
FIG. 8 is a schematic diagram of a drive path of a powertrain system in a fourth operating mode according to the present disclosure;
FIG. 9 is a schematic diagram of a drive path of a powertrain system in a fifth operating mode according to the present disclosure;
FIG. 10 is a schematic diagram of a drive path of a powertrain system in a sixth operating mode according to the present disclosure;
FIG. 11 is a schematic diagram of a drive path of a powertrain system in a seventh operating mode according to the present disclosure;
FIG. 12 is a schematic diagram of a drive path of a powertrain system in an eighth operating mode according to the present disclosure;
FIG. 13 is a schematic diagram of a drive path of a powertrain system in a ninth operating mode according to the present disclosure; and
FIG. 14 is a schematic diagram of a structure of a vehicle according to the present disclosure.

Description of reference numerals:
1000: powertrain system; 100: vehicle;
1: first motor;
2: drive assembly; 21: first drive gear; 22: second drive gear; 23: third drive gear; 24: fourth drive gear; 25: fifth drive gear; 26: first drive shaft;
3: differential;
4: engine;
5: transmission assembly; 51: input end; 511: first speed change gear; 52: output end; 521: second speed change gear; 53: first clutch end; 531: third speed change gear; 532: fourth speed change gear; 533: first clutch; 54: second clutch end; 541: fifth speed change gear; 542: sixth speed change gear; 543: second clutch; 55: third clutch; 551: first clutch position; 552: second clutch position; 56: second drive shaft; 57: third drive shaft;
6: sixth drive gear;
7: seventh drive gear;
8: fourth clutch; and
9: second motor.

### DESCRIPTION OF EMBODIMENTS

The following clearly and completely describes technical solutions in implementations of the present disclosure with reference to accompanying drawings in the implementations of the present disclosure. Clearly, the described implementations are merely some rather than all of the implementations of the present disclosure. All other implementations obtained by a person of ordinary skill in the art based on the implementations of the present disclosure without creative efforts shall fall within the protection scope of the present disclosure.

It should be noted that when a component is described as being "fastened to" another component, the component may be directly on the another component or there may be an intermediate component. When a component is considered to be "connected" to another component, the component may be directly connected to the another component or there may be an intermediate component.

Unless otherwise defined, all technical and scientific terms used in the present disclosure have same meaning as those commonly understood by a person skilled in the art to which the present disclosure pertains. The terms used in the specification of the present disclosure are merely intended to describe specific embodiments, and are not intended to limit the present disclosure. The term "and/or" used in the present disclosure includes any and all combinations of one or more related listed items.

The following describes some implementations of the present disclosure in detail with reference to the accompanying drawings. When there is no conflict, the following embodiments and features in the embodiments may be mutually combined.

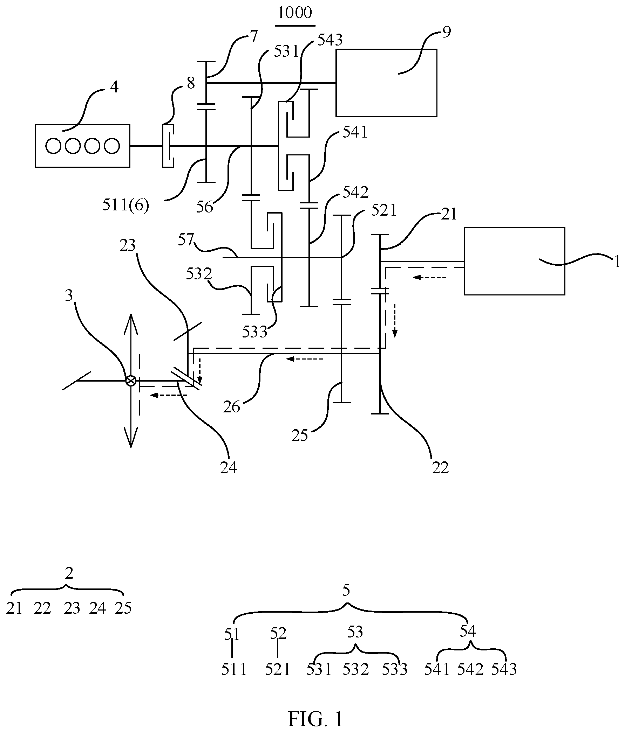

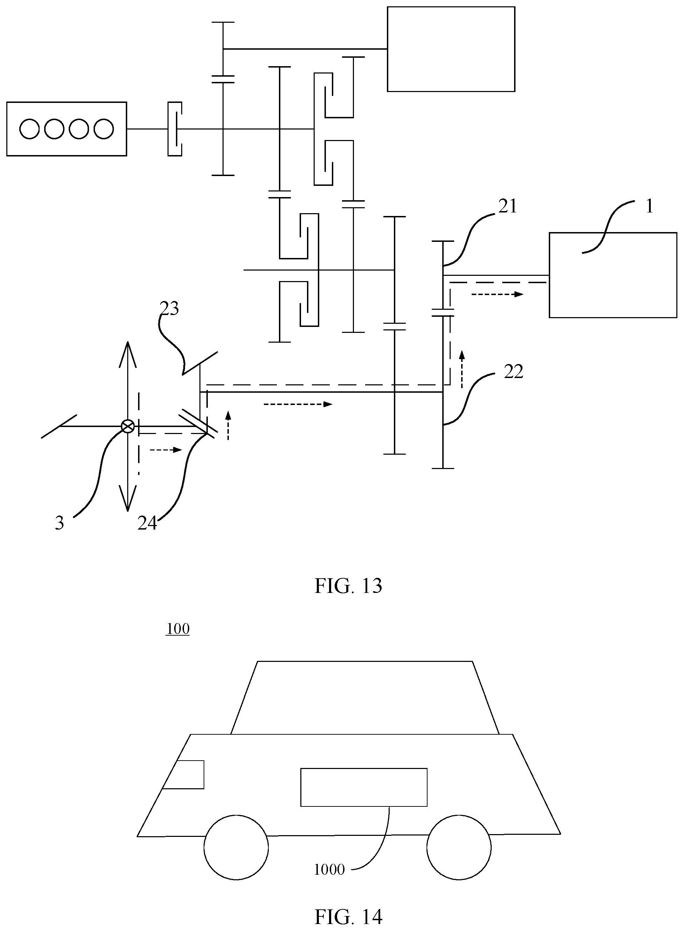

In a powertrain system in a related technology, power transfer efficiency is low in a pure electric mode. To resolve this problem, the present disclosure provides a vehicle 100. Referring to FIG. 1 and FIG. 14, the vehicle 100 includes a powertrain system 1000. The powertrain system 1000 includes a first motor 1, a drive assembly 2, and a differential 3. The drive assembly 2 includes a first drive gear 21, a second drive gear 22, a third drive gear 23, a fourth drive gear 24, and a first drive shaft 26. The first drive gear 21 is drivingly connected to the first motor 1, and the first drive gear 21 is meshed with the second drive gear 22. The second drive gear 22 and the third drive gear 23 are fastened to the first drive shaft 26, and are drivingly connected through the first drive shaft 26. The fourth drive gear 24 is fixedly disposed on the differential 3 and is meshed with the third drive gear 23. The powertrain system 1000 includes a first operating mode. In the first operating mode, power is transferred along a first path. In the first path, the power is transferred to the first drive gear 21 through the first motor 1, transferred to the second drive gear 22 through the first drive gear 21, transferred to the third drive gear 23 through the second drive gear 22, and transferred to the fourth drive gear 24 through the third drive gear 23, to drive the differential 3 drivingly connected to the fourth drive gear 24 to rotate.

In the present disclosure, the first operating mode is a pure electric mode of the vehicle 100. In the pure electric mode, the vehicle 100 outputs power to the powertrain system 1000 through the first motor 1. The power output by the first motor is transferred to the differential 3 through two-stage reduction (the first drive gear 21 and the second drive gear 22 are one stage, and the third drive gear 23 and the fourth drive gear 24 are one stage). Compared with multi-stage reduction between a motor and a differential in a related technology, the drive mode provided in the present disclosure features fewer reduction stages, a lower kinetic energy loss, and higher transfer efficiency.

When the vehicle 100 needs to move forward at a high speed, the powertrain system 1000 may further directly drive, through an engine 4, the vehicle 100 to move forward. Specifically, in a possible implementation of the present disclosure, the powertrain system 1000 further includes the engine 4 and a transmission assembly 5. The engine 4 is drivingly connected to the transmission assembly 5, and the transmission assembly 5 is drivingly connected to the drive assembly 2. Power from the engine 4 may be transferred to the drive assembly 2 through the transmission assembly 5, and then transferred to the differential 3 through the transmission drive assembly 2, to drive, through the engine 4, the vehicle 100 to move.

To improve economy of use of the vehicle 100, in another possible implementation of the present disclosure, the transmission assembly 5 includes an input end 51, an output end 52, a first clutch end 53, and a second clutch end 54. The input end 51 is drivingly connected to the engine 4, and the input end 51 is drivingly connected to both the first clutch end 53 and the second clutch end 54. The output end 52 is drivingly connected to the drive assembly 2, and the output end 52 is capable of being selectively drivingly connected to the first clutch end 53 and the second clutch end 54. Drive ratios of the first clutch end 53 and the second clutch end 54 are set to be different. In this way, power applied from the engine 4 to the differential 3 is adjusted, to adjust a travel speed of the vehicle 100, thereby adjusting power consumption of the vehicle 100.

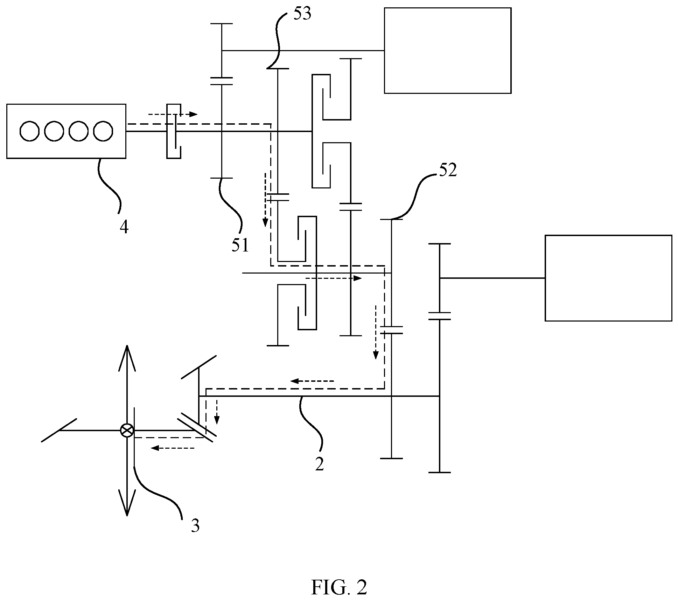

Specifically, referring to FIG. 2, the powertrain system 1000 further includes a second operating mode and a third operating mode. It should be explained that in the present disclosure, the drive ratio of the first clutch end 53 may be greater than the drive ratio of the second clutch end 54, or may be less than the drive ratio of the second clutch end 54. For ease of description, in the present disclosure, the first clutch end 53 is set to a low-gear clutch end, the second clutch end 54 is set to a high-gear clutch end, and the drive ratio of the first clutch end 53 is greater than the drive ratio of the second clutch end 54. Based on this, in a possible implementation of the present disclosure, the second operating mode is a low-gear engine direct-drive mode, and the third operating mode is a high-gear engine direct-drive mode. In the second operating mode, power is transferred along a second path. In the second path, the power is transferred to the input end 51 through the engine 4, and transferred to the drive assembly 2 through the first clutch end 53 and the output end 52, to drive the differential 3 to rotate.

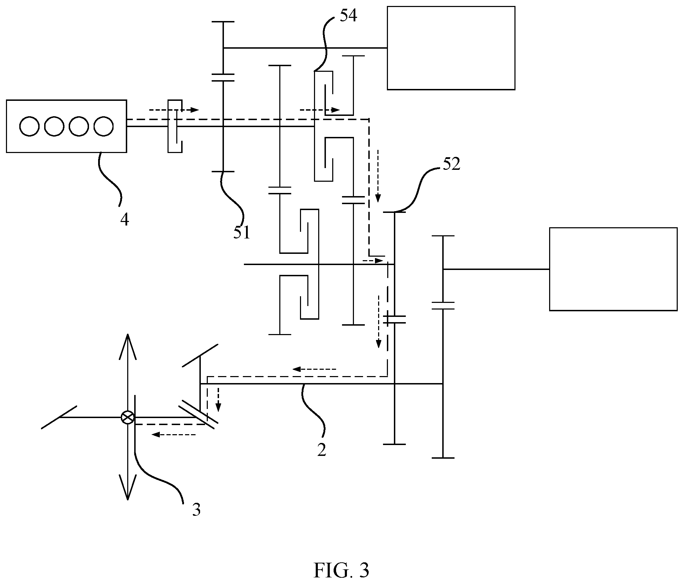

Referring to FIG. 3, in the third operating mode, power is transferred along a third path. In the third path, the power is transferred to the input end 51 through the engine 4, and transferred to the drive assembly 2 through the second clutch end 54 and the output end 52, to drive the differential 3 to rotate. It may be understood that in another possible implementation of the present disclosure, the drive ratio of the first clutch end 53 may be less than the drive ratio of the second clutch end 54. In these embodiments, the second operating mode may be a high-gear engine direct-drive mode, and the third operating mode may be a low-gear engine direct-drive mode. Details are not described herein in the present disclosure.

A user may select different operating modes based on different vehicle conditions. For example, when the vehicle 100 climbs a hill or carries a heavy load, the user may adjust a vehicle mode to the second operating mode. In the second operating mode, power is transmitted to the differential 3 through the first clutch end 53 with a relatively high drive ratio. In this case, although the vehicle 100 has a relatively low speed, torque is relatively high, making it suitable for climbing a hill or carrying a heavy load. When the user needs to travel at a high speed, the user may set the vehicle 100 to the third operating mode. In the third operating mode, power from the engine 4 is transmitted to the differential 3 through the second clutch end 54 with a relatively low transfer ratio. In this case, although energy consumption of the vehicle 100 is higher, a speed is higher, making it suitable for daily travel. The user may select different operating modes based on a requirement of the user, to reduce fuel consumption of the vehicle 100 and improve economy of the vehicle 100.

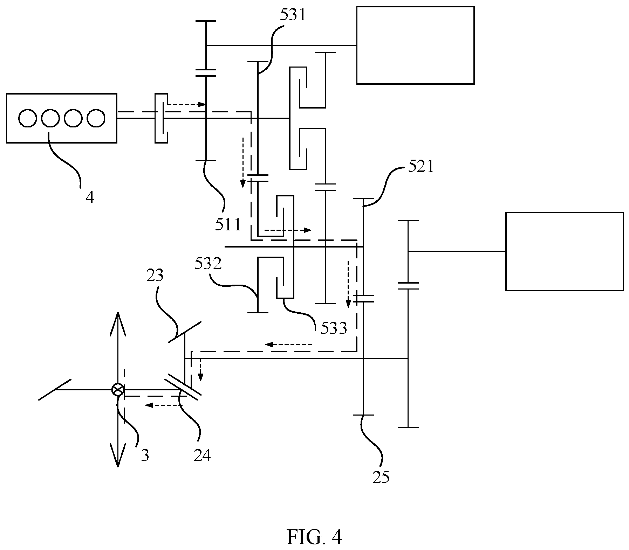

To implement switching between a high gear and a low gear of the vehicle 100, there may be a plurality of power structures in the transmission assembly 5. For example, referring to FIG. 4, in a possible implementation of the present disclosure, the drive assembly 2 further includes a fifth drive gear 25. The fifth drive gear 25 is drivingly connected to the third drive gear 23. The input end 51 includes a first speed change gear 511, and the first speed change gear 511 is drivingly connected to the engine 4. The output end 52 includes a second speed change gear 521, and the second speed change gear 521 is meshed with the fifth drive gear 25. The first clutch end 53 includes a third speed change gear 531, a fourth speed change gear 532, and a first clutch 533. The first speed change gear 511 is drivingly connected to the third speed change gear 531. The third speed change gear 531 is meshed with the fourth speed change gear 532. The first clutch 533 is clutch-connected to the fourth speed change gear 532, and the first clutch 533 is drivingly connected to the first speed change gear 511. In this embodiment, in the second path, power is transferred to the first speed change gear 511 through the engine 4, transferred to the third speed change gear 531 through the first speed change gear 511, transferred to the fourth speed change gear 532 through the third speed change gear 531, transferred to the first clutch 533 through the fourth speed change gear 532, transferred to the second speed change gear 521 through the first clutch 533, transferred to the fifth drive gear 25 through the second speed change gear 521, transferred to the third drive gear 23 through the fifth drive gear 25, and transferred to the fourth drive gear 24 through the third drive gear 23, to drive the differential 3 drivingly connected to the fourth drive gear 24 to rotate.

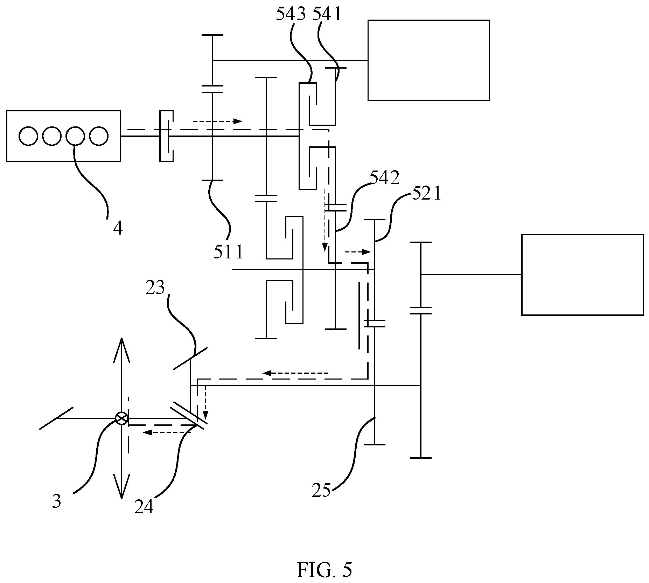

Referring to FIG. 5, the second clutch end 54 includes a fifth speed change gear 541, a sixth speed change gear 542, and a second clutch 543. The second clutch 543 is drivingly connected to the first speed change gear 511. The fifth speed change gear 541 is clutch-connected to the second clutch 543, and the fifth speed change gear 541 is meshed with the sixth speed change gear 542. The sixth speed change gear 542 is drivingly connected to the first speed change gear 511. In the third path, power is transferred to the first speed change gear 511 through the engine 4, transferred to the second clutch 543 through the first speed change gear 511, transferred to the fifth speed change gear 541 through the second clutch 543, transferred to the sixth speed change gear 542 through the fifth speed change gear 541, transferred to the second speed change gear 521 through the sixth speed change gear 542, transferred to the fifth drive gear 25 through the second speed change gear 521, transferred to the third drive gear 23 through the fifth drive gear 25, and transferred to the fourth drive gear 24 through the third drive gear 23, to drive the differential 3 drivingly connected to the fourth drive gear 24 to rotate.

In this embodiment, the first clutch 533 and the second clutch 543 are arranged in a first direction. The first direction and an axis direction of the engine 4 intersect each other, to optimize spatial arrangement of the first clutch 533 and the second clutch 543 in the powertrain system 1000, reduce an axial volume of the powertrain system 1000, and improve space utilization. It may be understood that the first direction and the axis direction of the engine 4 may intersect at 30°, or may intersect at 60°. This is not limited in the present disclosure. In a possible implementation of the present disclosure, the first direction and the axis direction of the engine 4 are perpendicular to each other, to maximize space utilization of the first clutch 533 and the second clutch 543 for the vehicle 100.

The first speed change gear 511, the third speed change gear 531, and the second clutch 543 may be meshed with and connected to each other, or may be connected to each other through a drive shaft. This is not limited in the present disclosure. In a possible implementation of the present disclosure, the transmission assembly 5 further includes a second drive shaft 56. The first speed change gear 511, the third speed change gear 531, and the second clutch 543 are fastened to the second drive shaft 56, and are drivingly connected to each other through the second drive shaft 56. The second drive shaft 56 is disposed to reduce a quantity of drive stages between the first speed change gear 511, the third speed change gear 531, and the second clutch 543, and lower a transfer loss of kinetic energy between the first speed change gear 511, the third speed change gear 531, and the second clutch 543. In addition, the second drive shaft 56 may enable the first speed change gear 511, the third speed change gear 531, and the second clutch 543 to be arranged in a same direction, to optimize an arrangement direction of the first speed change gear 511, the third speed change gear 531, and the second clutch 543 in the vehicle 100, thereby improving space utilization of the vehicle 100.

In another possible implementation of the present disclosure, the transmission assembly 5 further includes a third drive shaft 57. The first clutch 533, the sixth speed change gear 542, and the second speed change gear 521 are fastened to the third drive shaft 57, and transfer kinetic energy through the third drive shaft 57. Similar to the second drive shaft 56, the third drive shaft 57 is disposed to lower a transfer loss of kinetic energy between the first clutch 533, the sixth speed change gear 542, and the second speed change gear 521, thereby improving kinetic energy transfer efficiency. In addition, the third drive shaft 57 may optimize an arrangement direction of the first clutch 533, the sixth speed change gear 542, and the second speed change gear 521, thereby improving space utilization of the vehicle 100.

In a possible implementation of the present disclosure, the first drive shaft 26, the second drive shaft 56, and the third drive shaft 57 are arranged in a same direction, to facilitate mutual meshing between gears disposed on the first drive shaft, the second drive shaft 56, and the third drive shaft 57, and improve space utilization of the powertrain system for the vehicle 100.

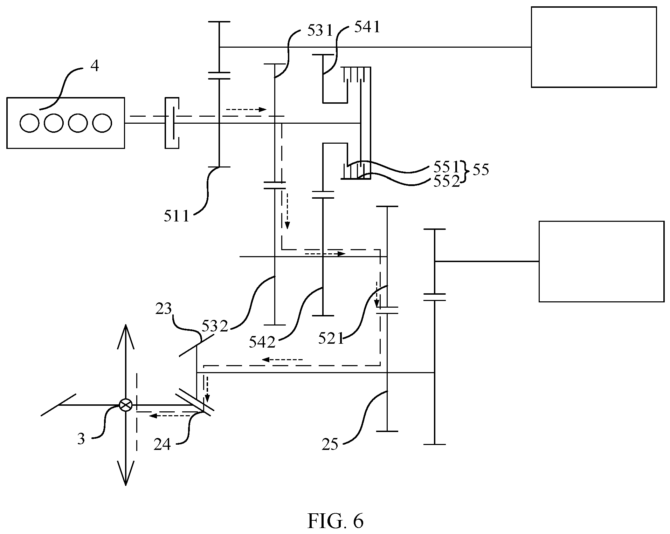

Referring to FIG. 6, the transmission assembly 5 is alternatively in another form. Specifically, in another possible implementation of the present disclosure, the transmission assembly 5 further includes a third clutch 55. The third clutch 55 is a dual clutch, and the third clutch has a first clutch position 551 and a second clutch position 552. Specifically, the drive assembly 2 further includes a fifth drive gear 25. The fifth drive gear 25 is drivingly connected to the third drive gear 23. The input end 51 includes a first speed change gear 511, and the first speed change gear 511 is drivingly connected to the engine 4. The output end 52 includes a second speed change gear 521, and the second speed change gear 521 is meshed with the fifth drive gear 25. The first speed change gear 511 is drivingly connected to the third clutch 55. The first clutch end 53 includes a third speed change gear 531 and a fourth speed change gear 532. The second clutch end 54 includes a fifth speed change gear 541 and a sixth speed change gear 542. The third speed change gear 531 is clutch-connected to the first clutch position 551 of the third clutch 55. The fourth speed change gear 532 is meshed with the third speed change gear 531. The fifth speed change gear 541 is clutch-connected to the second clutch position 552 of the third clutch 55. The sixth speed change gear 542 is meshed with the fifth speed change gear 541.

In this embodiment, in the second path, the first clutch position 551 of the third clutch 55 is meshed with the third speed change gear 531, the second clutch position 552 of the third clutch 55 is disconnected from the fifth speed change gear 541, and power is transferred to the third clutch 55 through the engine 4, transferred to the third speed change gear 531 through the first clutch position 551 of the third clutch 55, transferred to the fourth speed change gear 532 through the third speed change gear 531, transferred to the second speed change gear 521 through the fourth speed change gear 532, transferred to the fifth drive gear 25 through the second speed change gear 521, transferred to the third drive gear 23 through the fifth drive gear 25, and transferred to the fourth drive gear 24 through the third drive gear 23, to drive the differential 3 to rotate, so as to drive the vehicle 100 to move.

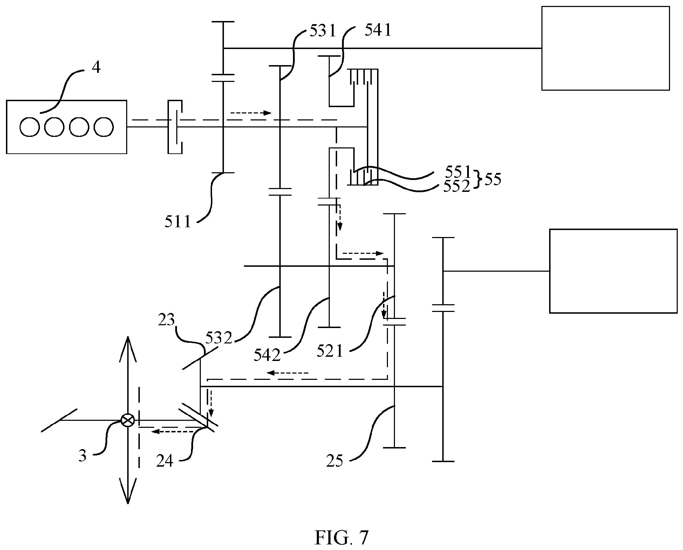

Referring to FIG. 7, in the third path, the first clutch position 551 of the third clutch 55 is disconnected from the third speed change gear 531, the second clutch position 552 of the third clutch 55 is meshed with the fifth speed change gear 541, and power is transferred to the first speed change gear 511 through the engine 4, transferred to the third clutch 55 through the first speed change gear 511, transferred to the fifth speed change gear 541 through the second clutch position 552 of the third clutch 55, transferred to the sixth speed change gear 542 through the fifth speed change gear 541, transferred to the second speed change gear 521 through the sixth speed change gear 542, transferred to the fifth drive gear 25 through the second speed change gear 521, transferred to the third drive gear 23 through the fifth drive gear 25, and transferred to the fourth drive gear 24 through the third drive gear 23, to drive the differential 3 to rotate, so as to drive the vehicle 100 to move.

In this embodiment, the third clutch 55, the second speed change gear 521, and the fifth drive gear 25 are disposed in a second direction. The second direction and an axis direction of the engine 4 are set to intersect each other, to optimize spatial arrangement of the third clutch 55, the second speed change gear 521, and the fifth drive gear 25 in the powertrain system 1000, reduce an axial volume of the powertrain system 1000, and improve space utilization. It may be understood that the second direction and the axis direction of the engine 4 may intersect at 30°, or may intersect at 60°. This is not limited in the present disclosure. In a possible implementation of the present disclosure, the second direction and the axis direction of the engine 4 are perpendicular to each other, to maximize space utilization of the third clutch 55, the second speed change gear 521, and the fifth drive gear 25 for the vehicle 100.

It may be understood that in another possible implementation of the present disclosure, the input end 51 may alternatively be in another form. For example, the first speed change gear 511 is removed, and the engine 4 is directly connected to the third speed change gear 531. Alternatively, a seventh speed change gear is disposed between the first speed change gear 511 and the engine. The seventh speed change gear is drivingly connected to the engine 4, and the seventh speed change gear is meshed with the first speed change gear 511. The first speed change gear 511 and the seventh speed change gear jointly form the output end, to drivingly connect the engine 4 and the transmission assembly 5.

Similarly, in another possible implementation of the present disclosure, the output end 52 may alternatively be in another form. For example, the second speed change gear 521 is removed, and the second speed change gear 521 is directly connected to the fifth drive gear 25. For another example, an eighth speed change gear is disposed between the second speed change gear 521 and the fifth drive gear 25. The second speed change gear 521 and the eighth speed change gear jointly form the output end 52, to drivingly connect the transmission assembly 5 and the drive assembly 2.

When the vehicle 100 travels at a high speed and the vehicle 100 has a sufficient state of charge, the engine 4 and the first motor 1 of the powertrain system 1000 may further drive in parallel to jointly drive the differential 3 to rotate. Specifically, in a possible implementation of the present disclosure, the powertrain system 1000 further includes a fourth operating mode and a fifth operating mode.

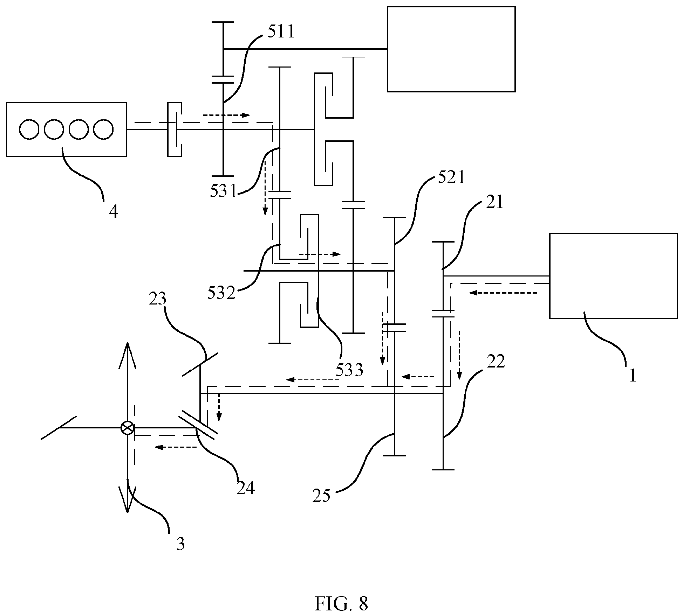

Referring to FIG. 8, in the fourth operating mode, power is separately transferred along the first path and the second path. In the first path, the power is transferred to the first drive gear 21 through the first motor 1, transferred to the second drive gear 22 through the first drive gear 21, transferred to the third drive gear 23 through the second drive gear 22, and transferred to the fourth drive gear 24 through the third drive gear 23, to drive the differential 3 drivingly connected to the fourth drive gear 24 to rotate. In the second path, the power is transferred to the first speed change gear 511 through the engine 4, transferred to the third speed change gear 531 through the first speed change gear 511, transferred to the fourth speed change gear 532 through the third speed change gear 531, transferred to the first clutch 533 through the fourth speed change gear 532, transferred to the second speed change gear 521 through the first clutch 533, transferred to the fifth drive gear 25 through the second speed change gear 521, transferred to the third drive gear 23 through the fifth drive gear 25, and transferred to the fourth drive gear 24 through the third drive gear 23, to drive the differential 3 drivingly connected to the fourth drive gear 24 to rotate. In this way, parallel drive of the vehicle 100 by the engine 4 and the first motor 1 is archived. Because a drive route of the engine 4 passes through the first clutch 533, this operating mode is also referred to as a low-gear parallel mode of the engine 4.

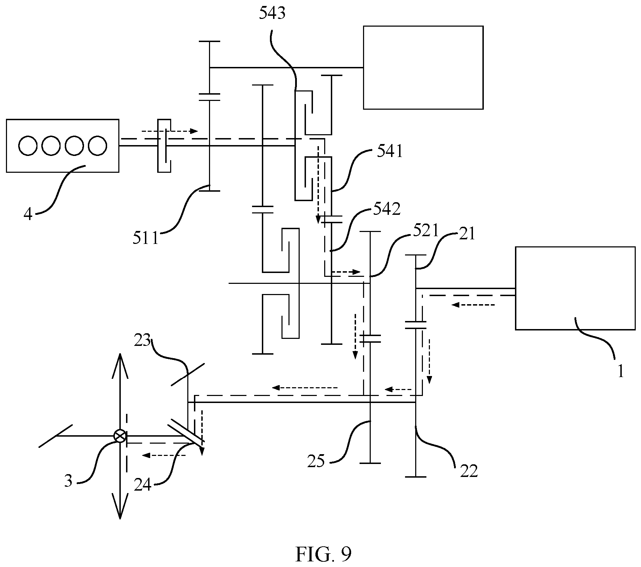

Referring to FIG. 9, in the fifth operating mode, power is separately transferred along the first path and the third path. In the first path, the power is transferred to the first drive gear 21 through the first motor 1, transferred to the second drive gear 22 through the first drive gear 21, transferred to the third drive gear 23 through the second drive gear 22, and transferred to the fourth drive gear 24 through the third drive gear 23, to drive the differential 3 drivingly connected to the fourth drive gear 24 to rotate. In the third path, the power is transferred to the first speed change gear 511 through the engine 4, transferred to the second clutch 543 through the first speed change gear 511, transferred to the fifth speed change gear 541 through the second clutch 543, transferred to the sixth speed change gear 542 through the fifth speed change gear 541, transferred to the second speed change gear 521 through the sixth speed change gear 542, transferred to the fifth drive gear 25 through the second speed change gear 521, transferred to the third drive gear 23 through the fifth drive gear 25, and transferred to the fourth drive gear 24 through the third drive gear 23, to drive the differential 3 drivingly connected to the fourth drive gear 24 to rotate. In this way, parallel drive of the vehicle 100 by the engine 4 and the first motor 1 is archived. Because a drive route of the engine 4 passes through the second clutch 543, this operating mode is also referred to as a high-gear parallel mode of the engine 4.

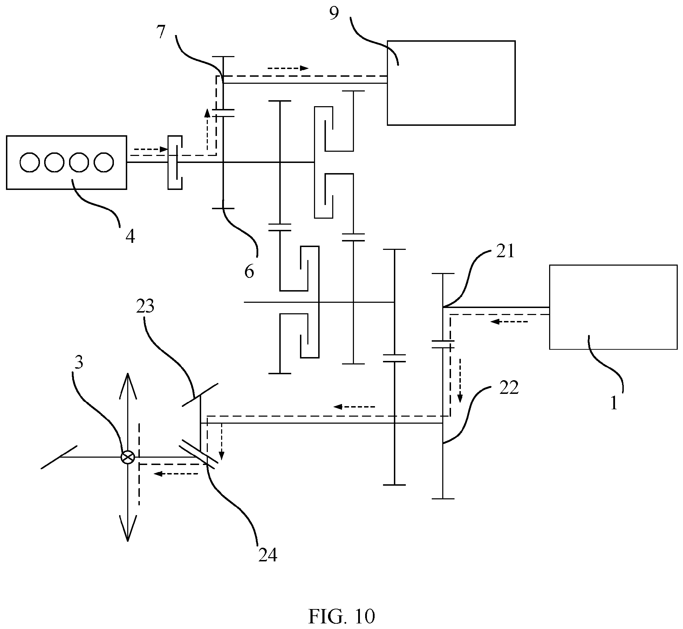

Referring to FIG. 10, when the vehicle 100 moves at a constant speed or a medium speed, the powertrain system 1000 further includes a sixth operating mode. The sixth operating mode is a motor-electric motor series mode. In this mode, the vehicle 100 may drive a second motor 9 to supply power to a battery, and then supply power to the first motor 1 through the battery. Specifically, the powertrain system 1000 further includes the second motor 9, and the powertrain system 1000 further includes the sixth operating mode. In the sixth operating mode, power is separately transferred along the first path and a fourth path. In the first path, the power is transferred to the first drive gear 21 through the first motor 1, transferred to the second drive gear 22 through the first drive gear 21, transferred to the third drive gear 23 through the second drive gear 22, and transferred to the fourth drive gear 24 through the third drive gear 23, to drive the differential 3 drivingly connected to the fourth drive gear 24 to rotate.

In the fourth path, the power is transferred to the second motor 9 through the engine 4. There are a plurality of transfer manners of transferring the power to the second motor 9 through the engine 4. In a possible implementation of the present disclosure, the powertrain system 1000 further includes a sixth drive gear 6 and a seventh drive gear 7. The sixth drive gear 6 is drivingly connected to the engine 4. The seventh drive gear 7 is drivingly connected to the second motor 9, and the seventh drive gear 7 is meshed with the sixth drive gear 6. The power is transferred to the sixth drive gear 6 through the engine 4, transferred to the seventh drive gear 7 through the sixth drive gear 6, and transferred to the second motor 9 through the seventh drive gear 7, to drive the second motor 9 to supply power to the battery of the vehicle 100. Certainly, the power may alternatively be transferred in the fourth path in another manner. For example, another drive gear may be added between the sixth drive gear 6 and the seventh drive gear 7 to cooperate with power transfer. This is not limited in the present disclosure.

To improve kinetic energy of the vehicle 100, the powertrain system 1000 further includes a seventh operating mode and an eighth operating mode. In the seventh operating mode and the eighth operating mode, the battery of the vehicle 100 may supply power to a second engine 4, and then the second engine 4 assists the engine 4 in driving the differential 3 to rotate. Specifically, in a possible implementation of the present disclosure, the powertrain system 1000 further includes a fourth clutch 8. The fourth clutch 8 is drivingly connected to the engine 4, and the fourth clutch 8 is clutch-connected to the sixth drive gear 6. The sixth drive gear 6 is drivingly connected to the clutch end.

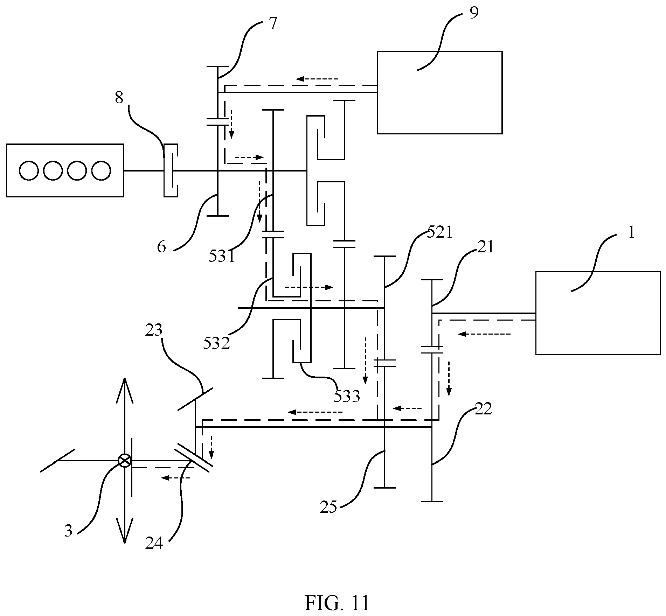

Referring to FIG. 11, the seventh operating mode is a low-gear generator assist mode, and is used to provide assistance to the engine 4 when the vehicle 100 is at a constant speed or a medium speed. In the seventh mode, power is separately transferred along the first path and a fifth path. In the first path, the power is transferred to the first drive gear 21 through the first motor 1, transferred to the second drive gear 22 through the first drive gear 21, transferred to the third drive gear 23 through the second drive gear 22, and transferred to the fourth drive gear 24 through the third drive gear 23, to drive the differential 3 drivingly connected to the fourth drive gear 24 to rotate. In the fifth path, the fourth clutch 8 is disconnected from the sixth drive gear 6, and the power is transferred to the seventh drive gear 7 through the second motor 9, transferred to the sixth drive gear 6 through the seventh drive gear 7, transferred to the first clutch end 53 through the sixth drive gear 6, transferred to the output end 52 through the first clutch end 53, and transferred to the drive assembly 2 through the output end 52, to drive the differential 3 to rotate. More specifically, in a possible implementation of the present disclosure, in the fifth path, the power is transferred to the seventh drive gear 7 through the second motor 9, transferred to the sixth drive gear 6 through the seventh drive gear 7, transferred to the third speed change gear 531 through the sixth drive gear 6, transferred to the fourth speed change gear 532 through the third speed change gear 531, transferred to the first clutch 533 through the fourth speed change gear 532, transferred to the second speed change gear 521 through the first clutch 533, transferred to the fifth drive gear 25 through the second speed change gear 521, transferred to the third drive gear 23 through the fifth drive gear 25, and transferred to the fourth drive gear 24 through the third drive gear 23, to drive the differential 3 drivingly connected to the fourth drive gear 24 to rotate.

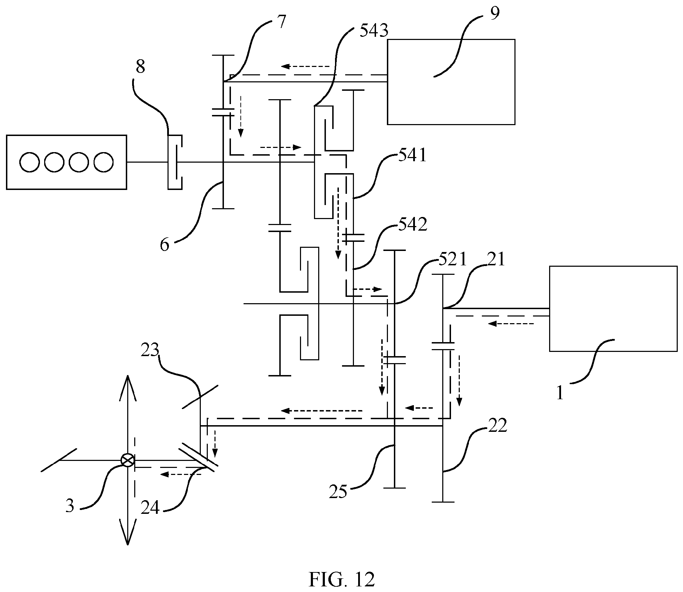

Referring to FIG. 12, the eighth operating mode is a high-gear generator assist mode, and the eighth operating mode is used to provide assistance to the engine 4 when the vehicle 100 is at a high speed. The eighth operating mode is the high-gear generator assist mode. In the eighth operating mode, power is separately transferred along the first path and a sixth path. In the first path, the power is transferred to the first drive gear 21 through the first motor 1, transferred to the second drive gear 22 through the first drive gear 21, transferred to the third drive gear 23 through the second drive gear 22, and transferred to the fourth drive gear 24 through the third drive gear 23, to drive the differential 3 drivingly connected to the fourth drive gear 24 to rotate. In the sixth path, the fourth clutch 8 is disconnected from the sixth drive gear 6, and the power is transferred to the seventh drive gear 7 through the second motor 9, transferred to the sixth drive gear 6 through the seventh drive gear 7, transferred to the second clutch end 54 through the sixth drive gear 6, transferred to the output end 52 through the second clutch end 54, and transferred to the drive assembly 2 through the output end 52, to drive the differential 3 to rotate. More specifically, in a possible implementation of the present disclosure, in the sixth path, the power is transferred to the seventh drive gear 7 through the second motor 9, transferred to the sixth drive gear 6 through the seventh drive gear 7, transferred to the second clutch 543 through the sixth drive gear 6, transferred to the fifth speed change gear 541 through the second clutch 543, transferred to the sixth speed change gear 542 through the fifth speed change gear 541, transferred to the second speed change gear 521 through the sixth speed change gear 542, transferred to the fifth drive gear 25 through the second speed change gear 521, transferred to the third drive gear 23 through the fifth drive gear 25, and transferred to the fourth drive gear 24 through the third drive gear 23, to drive the differential 3 drivingly connected to the fourth drive gear 24 to rotate.

It should be noted that in this embodiment, the sixth drive gear 6 and the first speed change gear 511 may be a same gear, or may be different gears. In a possible implementation of the present disclosure, the sixth drive gear 6 and the first speed change gear 511 are the same gear, to reduce use of the gear of the powertrain system 1000 and improve space utilization of the powertrain system 1000.

Referring to FIG. 13, to improve economic performance of the vehicle 100, the powertrain system 1000 further includes a ninth operating mode. The ninth operating mode is an energy recovery mode, and is used to convert kinetic energy of the vehicle 100 into electrical energy and store the electrical energy when the vehicle 100 is in a coasting state or a braking state, to reuse the kinetic energy of the vehicle 100. Specifically, in a possible implementation of the present disclosure, in the ninth operating mode, power is transferred along a seventh path. In the seventh path, the power is transferred to the fourth drive gear 24 through the differential 3, transferred to the third drive gear 23 through the fourth drive gear 24, transferred to the second drive gear 22 through the third drive gear 23, transferred to the first drive gear 21 through the second drive gear 22, and transferred to the first motor 1 through the first drive gear 21, and drives the first motor to generate power for the battery of the vehicle 100. In this way, the kinetic energy of the vehicle 100 is converted into electrical energy, thereby achieving kinetic energy recovery of the vehicle 100.

In the descriptions of the embodiments of the present disclosure, it should be noted that orientations or position relationships indicated by terms "center", "upper", "lower", "left", "right", "vertical", "horizontal", "inner", "outer", and the like are orientations or position relationships based on the accompanying drawings, and are merely used for ease of describing the present disclosure and simplifying the descriptions, rather than indicating or implying that a described apparatus or element needs to have a specific orientation or needs to be constructed and operated in a specific orientation, and therefore cannot be understood as a limitation on the present disclosure.

Only example embodiments of the present disclosure are disclosed above. Certainly, the scope of the claims of the present disclosure cannot be limited thereto. A person of ordinary skill in the art may understand that all or some of procedures for implementing the foregoing embodiments and equivalent modifications made according to the claims of the present disclosure shall fall within the scope of the present disclosure.

## Claims

1. A powertrain system (1000), comprising a first motor (1), a drive assembly (2), and a differential (3), the drive assembly (2) comprising a first drive gear (21), a second drive gear (22), a third drive gear (23), and a fourth drive gear (24);
the first drive gear (21) being drivingly connected to the first motor (1), and the first drive gear (21) being meshed with the second drive gear (22);
the second drive gear (22) being drivingly connected to the third drive gear (23); and
the fourth drive gear (24) being fixedly disposed on the differential (3) and being meshed with the third drive gear (23).

2. The powertrain system (1000) according to claim 1, wherein the drive assembly (2) further comprises a first drive shaft (26); and
the second drive gear (22) and the third drive gear (23) are fastened to the first drive shaft (26).

3. The powertrain system (1000) according to claim 1, wherein the powertrain system (1000) further comprises an engine (4) and a transmission assembly (5), and the transmission assembly (5) comprises an input end (51), an output end (52), a first clutch end (53), and a second clutch end (54);
the input end (51) is drivingly connected to the engine (4), and the input end (51) is drivingly connected to both the first clutch end (53) and the second clutch end (54); and
the output end (52) is drivingly connected to the drive assembly (2), and the output end (52) is capable of being selectively drivingly connected to the first clutch end (53) and the second clutch end (54).

4. The powertrain system (1000) according to claim 3, wherein the drive assembly (2) further comprises a fifth drive gear (25);
the fifth drive gear (25) is drivingly connected to the third drive gear (23);
the input end (51) comprises a first speed change gear (511), and the first speed change gear (511) is drivingly connected to the engine (4);
the output end (52) comprises a second speed change gear (521), and the second speed change gear (521) is meshed with the fifth drive gear (25); and
the first clutch end (53) comprises a third speed change gear (531), a fourth speed change gear (532), and a first clutch (533), the first speed change gear (511) is drivingly connected to the third speed change gear (531), the third speed change gear (531) is meshed with the fourth speed change gear (532), the first clutch (533) is clutch-connected to the fourth speed change gear (532), and the first clutch (533) is drivingly connected to the first speed change gear (511).

5. The powertrain system (1000) according to claim 4, wherein the second clutch end (54) comprises a fifth speed change gear (541), a sixth speed change gear (542), and a second clutch (543), the second clutch (543) is drivingly connected to the first speed change gear (511), the fifth speed change gear (541) is clutch-connected to the second clutch (543), the fifth speed change gear (541) is meshed with the sixth speed change gear (542), and the sixth speed change gear (542) is drivingly connected to the first speed change gear (511).

6. The powertrain system (1000) according to claim 5, wherein the transmission assembly (5) further comprises a second drive shaft (56) and a third drive shaft (57);
the first speed change gear (511), the third speed change gear (531), and the second clutch (543) are fastened to the second drive shaft (56); and
the first clutch (533), the sixth speed change gear (542), and the second speed change gear (521) are fastened to the third drive shaft (57).

7. The powertrain system (1000) according to claim 6, wherein the first drive shaft (26), the second drive shaft (56), and the third drive shaft (57) are arranged in a same direction.

8. The powertrain system (1000) according to claim 5, wherein the first clutch (533) and the second clutch (543) are arranged in a first direction; and
the first direction and an axis direction of the engine (4) intersect each other.

9. The powertrain system (1000) according to claim 8, wherein the first direction and the axis direction of the engine (4) are perpendicular to each other.

10. The powertrain system (1000) according to claim 3, wherein the transmission assembly (5) further comprises a third clutch (55), the third clutch (55) has a first clutch position (551) and a second clutch position (552), the first clutch position (551) of the third clutch (55) is capable of being selectively clutch-connected to the first clutch end (53), and the second clutch position (552) of the third clutch (55) is capable of being selectively clutch-connected to the second clutch end (54).

11. The powertrain system (1000) according to claim 10, wherein the drive assembly (2) further comprises a fifth drive gear (25);
the fifth drive gear (25) is drivingly connected to the third drive gear (23);
the input end (51) comprises a first speed change gear (511), and the first speed change gear (511) is drivingly connected to the engine (4);
the output end (52) comprises a second speed change gear (521), and the second speed change gear (521) is meshed with the fifth drive gear (25);
the first clutch end (53) comprises a third speed change gear (531) and a fourth speed change gear (532), and the second clutch end (54) comprises a fifth speed change gear (541) and a sixth speed change gear (542); and
the first speed change gear (511) is drivingly connected to the third clutch (55), the third speed change gear (531) is clutch-connected to the first clutch position (551) of the third clutch (55), the fourth speed change gear (532) is meshed with the third speed change gear (531), the fifth speed change gear (541) is clutch-connected to the second clutch position (552) of the third clutch (55), and the sixth speed change gear (542) is meshed with the fifth speed change gear (541).

12. The powertrain system (1000) according to claim 11, wherein the third clutch (55), the second speed change gear (521), and the fifth drive gear (25) are disposed in a second direction; and
the second direction and an axis direction of the engine (4) intersect each other.

13. The powertrain system (1000) according to claim 12, wherein the second direction and the axis direction of the engine (4) are perpendicular to each other.

14. The powertrain system (1000) according to claim 3, further comprising a second motor (9), a sixth drive gear (6), and a seventh drive gear (7),
the sixth drive gear (6) being drivingly connected to the engine (4); and
the seventh drive gear (7) being drivingly connected to the second motor (9), and the seventh drive gear (7) being meshed with the sixth drive gear (6).

15. The powertrain system (1000) according to claim 14, wherein the powertrain system (1000) further comprises a fourth clutch (8), the fourth clutch (8) is drivingly connected to the engine (4), the fourth clutch (8) is clutch-connected to the sixth drive gear (6), and the sixth drive gear (6) is drivingly connected to the clutch end.

16. A vehicle (100), comprising the powertrain system (1000) according to any one of claims 1 to 15.
